# EUROPÄISCHE PATENTSCHRIFT

(11) **EP 0 351 738 B1**
(45) Veröffentlichungstag und Bekanntmachung des Hinweises auf die Patenterteilung: **16.06.1993**
(21) Anmeldenummer: 89112985.0
(22) Anmeldetag: 14.07.1989
(51) Int. Cl.: F16F 1/36, B60K 5/12

(54) **Ringförmiger Federkörper aus Faserverbundwerkstoffen**
Annular spring element of fibre-reinforced plastic material
Elément ressort annulaire en matière plastique renforcée de fibres

(30) Priorität: 22.07.1988 DE 3825022; 15.03.1989 DE 3908474
(43) Veröffentlichungstag der Anmeldung: 24.01.1990
(73) Patentinhaber: METZELER GIMETALL AG, D-80992 München (DE)
(72) Erfinder: Härtel, Volker, Dr., D-8034 Germering (DE); Müller, Siegfried, D-8051 Allershausen (DE); Heynemann, Carl, D-8028 Taufkirchen (DE); Richter, Matthias, Dr., D-8084 Inning (DE); Hundt, Werner, D-8000 München 83 (DE)
(74) Vertreter: Michelis, Theodor

(56) Entgegenhaltungen:
- EP-A- 0 042 068
- EP-A- 0 223 617
- DE-U- 1 906 805
- FR-A- 2 138 481
- FR-A- 2 418 389

## Beschreibung

Die Erfindung bezieht sich auf einen ringförmigen Federkörper aus Faserverbundwerkstoff zur schwingungsisolierenden Lagerung von Antriebsaggregaten, insbesondere in Kraftfahrzeugen, der einen Wickelkörper mit in mehreren Lagen gewickelten, mit Kunststoff getränkten Fasern aufweist und an zwei gegenüberliegenden Stellen eingespannt ist, wobei mehrere Wickellagen in Umfangsrichtung des Wickelkörpers und quer zur Belastungsrichtung verlaufende Fasern sowie mindestens eine Lage aus im Winkel zu den in anderen Lagern verlaufenden Fasern aufweisen. Ein derartiger Federkörper ist aus der EP-A-0042068 bekannt, der ebenfalls aus Faserverbundwerkstoffen besteht und eine rahmenförmige Gestalt aufweist. Dieser Federkörper ist jedoch aus in Rahmenebene geschichteten Wickelkörpern und entsprechenden Zwischenlagen aufgebaut, wodurch sich eine sehr hohe Steifigkeit dieses Federkörpers ergibt, so daß er schon von daher für die Verwendung in Kraftfahrzeugen, insbesondere zur Motorlagerung, nicht geeignet ist.

Wesentlich für eine solche Motorlagerung ist aber - wie sie auch mit herkömmlichen Gummi-Metall-Elementen nicht zu erreichen waren - eine statische Einfederung über die Belastungszeit zu vermeiden, wodurch auch eine Verschlechterung der akustischen Isolationswirkung bedingt ist. Ferner soll eine dynamische Verhärtung vermieden werden, die sich bei Gummilagern mit steigender Frequenz durch eine zunehmende dynamische Steifigkeit des Lagers ergibt, wodurch insbesondere die Übertragung hochfrequenter Schwingungen begünstigt wird.

Der vorliegenden Erfindung liegt demgegenüber die Aufgabe zugrunde, einen Federkörper zu schaffen, der sich unter statischer Belastung nicht setzt und dessen dynamische Steifigkeit bei steigenden Frequenzen nicht wesentlich über die statische Steifigkeit ansteigt und der damit eine gute akustische Isolierung gewährleistet.

Zur Lösung dieser Aufgabe ist ausgehend vom eingangs genannten Stand der Technik erfindungsgemäß vorgesehen, daß der Wickelkörper aus mehreren konzentrischen Wickellagen besteht und daß die Einspannungen durch Krafteinleitungselemente gebildet sind, die aus metallischen Bügeln bestehen, die den Wickelkörper zumindest teilweise umfassen und über elastische Gummischichten mit dem Wickelkörper verbunden sind.

Ein derartiger Federkörper läßt sich hinreichend klein und mit relativ dünner Wandstärke herstellen, wobei er optimale Federeigenschaften ohne statisches Setzen und ohne dynamische Verhärtung aufweist.

Besonders zweckmäßig ist es, wenn mehrere, einen gemeinsamen Schwerpunkt aufweisende, ineinanderliegende Wickelkörper vorgesehen sind, die zumindest abschnittsweise über dazwischenliegende Schichten aus einem anderen Material voneinander beabstandet sind.

Dabei können die einzelnen ineinanderliegenden Wickelkörper parallel zueinander verlaufende Außenkonturen und umlaufend gleichen Abstand voneinander aufweisen.

Die Zwischenschicht kann dabei aus Gummi bestehen, die an die Wickelkörper anvulkanisiert ist.

Zur einfacheren Herstellung kann es demgegenüber zweckmäßig sein, wenn die Zwischenschicht aus im Winkel zur Umfangsrichtung verlaufenden eingewickelten Gummibändern oder aber aus schichtweise eingewickelten Gleitfolien besteht.

Die Gleitfolien sind zweckmäßigerweise aus PTFE hergestellt.

Zur Vermeidung von Rissen in Längsrichtung ist es dabei zweckmäßig, wenn zumindest eine Oberflächenseite der Zwischenschicht lose zum benachbarten Wickelkörper geführt ist.

Zur Erreichung nichtlinearer Federkennlinien können die einzelnen Wickelkörper vor dem Einvulkanisieren des Gummis gegeneinander verspannt sein.

Zweckmäßigerweise sind die Gummischichten der Einspannung zwischen Bügeln und Wickelkörper einvulkanisiert. Sie können auch eingeklebt oder lediglich eingeklemmt sein.

Die Bügel können als den Wickelkörper umschließende, geschlossene Ringe mit rechteckigem Querschnitt ausgebildet sein und seitliche Anschlußelemente aufweisen. Es ist aber auch möglich, die Bügel aus zwei U-förmigen, gegeneinander verspannten Laschen herzustellen.

Als Druckanschlag kann auf der Innenseite mindestens eines der Bügel noch ein Gummipolster anvulkanisiert sein.

Gleichzeitig kann der Federkörper Zuganschläge aufweisen, die aus in Druckrichtung flexiblen oder lose gehenden Elementen bestehen, die bei Zugbelastung einen den Ausfederungsweg begrenzenden Anschlag aufweisen. Derartige, in Druckrichtung lose gehende Zuganschläge sind für sich aus dem DE-GM 19 06 805 für Gummi-Metall-Bauteile bekannt.

Dabei kann der Wickelkörper mittels Anziehen der Zuganschläge vorgespannt werden.

Anhand einer schematischen Zeichnung sind Aufbau und Funktionsweise von Ausführungsbeispielen nach der Erfindung näher erläutert. Dabei zeigen
- Fig. 1: eine perspektivische Ansicht eines entsprechenden Federkörpers aus einem Wickelkörper mit den beiden Einspannungen,
- Fig. 2: einen Querschnitt durch einen Federkörper, der aus zwei Wickelkörpern in konzentrischer Anordnung besteht,
- Fig. 3: einen Teilquerschnitt in perspektivischer Ansicht mit einer eingewickelten Zwischenschicht,
- Fig. 4: einen Querschnitt durch einen Federkörper mit zwei Wickelkörpern koaxialer Anordnung und
- Fig. 5: einen Querschnitt durch einen Federkörper mit zwei Wickelkörpern unterschiedlicher Geometrie.

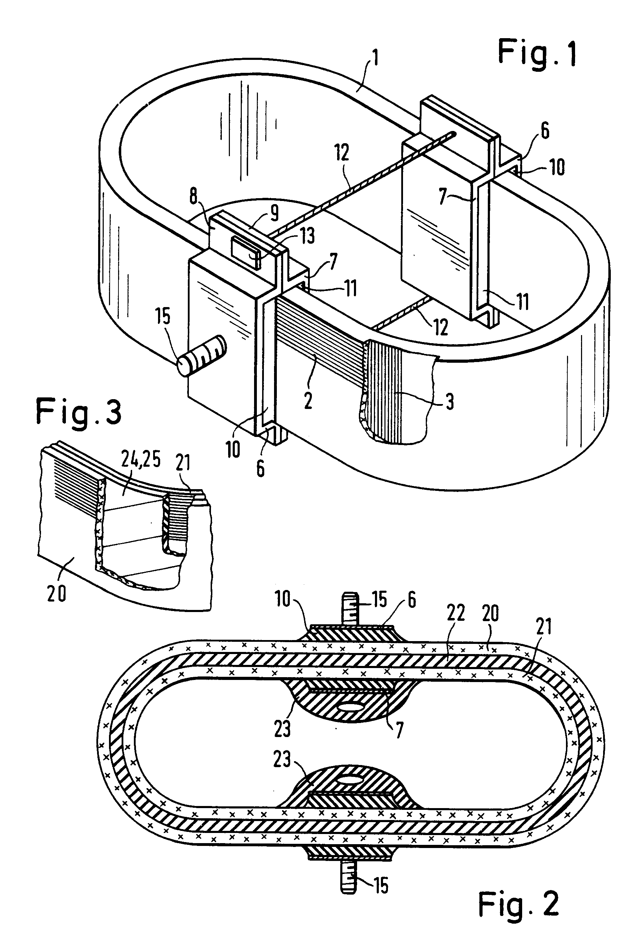

In Fig. 1 ist ein Federkörper aus einem einzigen Wickelkörper 1 dargestellt, der angenähert ovale Form mit zwei geraden Mittelteilen und halbkreisförmigen Seitenteilen aufweist. Es ist aber - je nach den gewünschten Anforderungen - auch jede andere geschlossene geometrische Form möglich, wie beispielsweise eine Ellipse oder ein Kreis.

Der Wickelkörper 1 besteht aus mehreren Schichten Fasern, die hauptsächlich quer zur Beanspruchungsrichtung umlaufend gewickelt sind. Im Teilschnitt ist dabei die außenliegende Schicht 2 gezeigt. Einzelne der Schichten, vorzugsweise die mittlere Schicht 3 des Wickelkörpers 1, bestehen jedoch zweckmäßigerweise aus Gewebe mit querverlaufenden Fasern bzw. aus Fasern, die in einem von dem Faserverlauf der äußeren Lage 2 abweichenden Winkel gewickelt sind.

Als verstärkende Fasern kommen im wesentlichen Glasfasern, aber auch Kohlefasern oder Aramid infrage, während als aushärtbare Matrixmaterialien im wesentlichen Duroplaste oder aber auch Thermoplaste, z.B. Polyetheretherketon (PEEK), verwendet werden können.

Der fertiggewickelte, getränkte und ausgehärtete Wickelkörper 1 wird dann auf einander gegenüberliegenden Seiten über entsprechende Krafteinleitungselemente an den entsprechenden Lagerpunkten festgelegt. Diese Krafteinleitungselemente können nach dem dargestellten Ausführungsbeispiel aus Bügeln in Form von zwei U-förmigen Laschen 6 und 7 bestehen, die über seitliche Stege 8 und 9 gegeneinander verspannt sind und den Wickelkörper 1 an den Längsseiten umschließen. Zwischen den Laschen 6 und 7 und dem Wickelkörper 1 sind elastische Zwischenschichten 10 und 11 aus Gummi angeordnet. Diese Gummischichten 10 und 11 können zwischen den Laschen 6 bzw. 7 und dem Wickelkörper 1 einvulkanisiert sein; es ist aber auch möglich, diese dort einzukleben oder auch nur zwischenzuklemmen.

Wie man darüber hinaus noch aus Fig. 1 sieht, kann ein nur schematisch dargestellter Zuganschlag vorgesehen werden, der beispielsweise aus einem flexiblen Drahtseil 12 bestehen kann, und an den Stegen 8 und 9 der beiden Krafteinleitungselemente in einem Widerlager 13 festgelegt ist. Ein solcher Zuganschlag 12 ist in Druckrichtung flexibel, verhindert aber in Zugrichtung eine zu starke Aufweitung des Federringes. Neben dem dargestellten Ausführungsbeispiel sind aber noch andere Ausgestaltungen des Zuganschlages möglich, der aber stets in Druckrichtung flexibel oder lose gehend ausgebildet sein soll und in Zugrichtung eine Wegbegrenzung bewirkt.

Bei dem Ausführungsbeispiel nach Fig. 2 sind zwei konzentrische, parallel zueinander verlaufende Wickelkörper 20 und 21 vorgesehen, die über eine elastische Zwischenschicht 22 aus Gummi, die sich über den gesamten Umfang des Zwischenraums erstreckt, miteinander verbunden sind. Die beiden Wickelkörper 20 und 21 werden dabei in gleicher Weise und gleichem Aufbau wie der Wickelkörper 1 nach Fig. 1 hergestellt und anschließend wird die entsprechende Gummischicht 22 zwischen den beiden Wickelkörpern 20 und 21 einvulkanisiert.

Dabei können die Wickelkörper 20 und 21 beim Einvulkanisieren des Gummis kraftfrei, d.h. ohne Vorspannung, verwendet werden. Es ist aber auch zur Erzielung bestimmter Eigenspannungen möglich, die beiden Wickelkörper 20 und 21 vor dem Vulkanisieren gegeneinander zu verspannen, wodurch sich eine nichtlineare bzw. S-förmige statische Federkennlinie erzielen läßt.

Die Anbindung an den Motor bzw. den Lagerpunkt im Fahrzeug erfolgt in gleicher Weise wie bei dem Federkörper nach Fig. 1 über die Gummischichten 10 und die Bügel 6 und 7 sowie die außenliegenden Schraubbolzen 15. Dabei sind aber auch andere Anschlußelemente denkbar.

Zusätzlich sind bei dem dargestellten Federkörper noch innenliegende Druckanschläge vorgesehen, die beispielsweise aus auf die innenliegenden Bügel 7 aufvulkanisierten Gummikissen 23 bestehen können. Es ist aber auch möglich, nur auf einer Seite ein Gummikissen oder aber ein einstückiges, durchgehendes Gummikissen vorzusehen.

Bei dem in Fig. 2 dargestellten Federkörper sind zwei Wickelkörper mit einer zwischenvulkanisierten Gummischicht vorgesehen. Es ist aber auch möglich, mehr als zwei Wickelkörper mit entsprechender Anzahl Gummischichten zu verwenden, je nach den gestellten Anforderungen und Belastungen.

Statt einer Einvulkanisation der Gummischicht 22 entsprechend Fig. 2 ist es aber auch möglich - wie in dem Teilquerschnitt nach Fig. 3 zu ersehen - die Zwischenschicht durch Gummibänder 24 zu bilden, die schichtweise eingewickelt werden. Damit ergibt sich insbesondere eine Herstellungsvereinfachung, da jetzt in einem kontinuierlichen Wickelprozeß auf den inneren Wickelkörper 21 unmittelbar die Gummibänder 24 im Winkel zur Umfangsrichtung aufgewickelt werden. Anschließend wird dann der äußere Wickelkörper 20 aufgebracht.

Anstelle derartiger Gummibänder 24 ist es aber auch möglich, Gleitfolien 25, insbesondere aus PTFE zu verwenden, die ebenfalls während der Herstellung des Federkörpers schichtweise eingewickelt werden. Diese gesondert eingewickelte Zwischenschicht soll zweckmäßigerweise auf der einen Seite fest und auf der anderen Seite lose zum benachbarten Wickelkörper geführt werden, wobei zweckmäßigerweise eine Bindung zwischen dem inneren Wickelkörper 21 und der Zwischenschicht 25 besteht, die Zwischenschicht 25 mit dem äußeren Wickelkörper 20 jedoch nicht verbunden ist. Damit wird einmal - insbesondere bei schräg einwirkenden Belastungen - vermieden, daß sich Risse in Längsrichtung und damit ein Aufrichten des Federkörpers ergibt. Zum andern bewirkt die getrennte Führung eine hohe Nachgiebigkeit im Gegensatz zu einer kompakten Feder, so daß trotz gleicher Haltbarkeit die dynamische Steifigkeit wesentlich herabgesetzt wird. Schließlich führen derartige Gleitschichten zu einer zusätzlichen amplitudenabhängigen Reibungsdämpfung im Federkörper, die besonders im niederfrequenten Bereich von Vorteil sein kann.

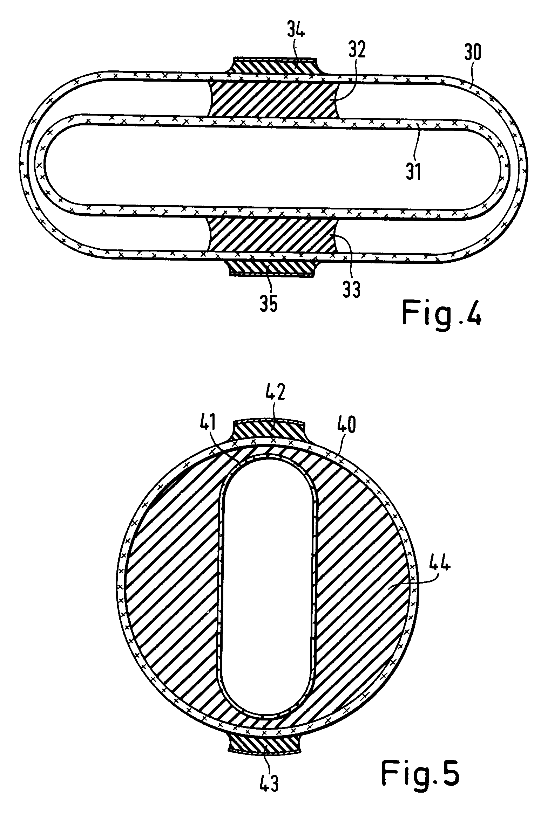

In Fig. 4 ist ein weiterer Federkörper mit zwei Wickelkörpern 30 und 31 gezeigt, die jedoch nur über die geraden Abschnitte parallel zueinander verlaufen. Bei diesem Ausführungsbeispiel ist auch nicht der gesamte Spalt zwischen den beiden Wickelkörpern 30 und 31 mit Gummi ausgefüllt, sondern nur die beiden Abschnitte 32 und 33, was für die Kopplung bei entsprechenden gewünschten Kennlinien voll ausreichend ist. Auch hierbei ist der äußere Wickelkörper 30 mit entsprechend anvulkanisierten Krafteinleitungselementen 34 und 35 versehen.

Bei dem in Fig. 5 dargestellten Ausführungsbeispiel ist ein Federkörper mit zwei Wickelkörpern 40 und 41 unterschiedlicher geometrischer Form dargestellt. Der Querschnitt des äußeren Wickelkörpers 40 ist dabei kreisförmig, während der innenliegende Wickelkörper 41 eine ovale Form hat, dessen größte Länge geringfügig kleiner oder gleich dem Innendurchmesser des kreisförmigen Wickelkörpers 40 ist. Zweckmäßigerweise ist dabei der innere Wickelkörper 41 sehr viel dünner als der äußere ausgebildet, so daß bei Krafteinleitung über die beiden, entsprechend gebogen ausgebildeten Krafteinleitungselemente 42 und 43 ein Ausbeulen des inneren Wickelkörpers 41 nach außen möglich ist.

Bei diesem Federkörper ist der gesamte Zwischenraum zwischen den Wickelkörpern 40 und 41 mit Gummi 44 ausgefüllt.

Insgesamt ergibt sich somit ein Federkörper, der unter statischer Last keine Setzungserscheinungen aufweist. Ein Federkörper in einschaligem Aufbau entsprechend Fig. 1 hat dabei eine nahezu frequenzunabhängige lineare dynamische Kennlinie in Höhe der statischen Steifigkeit, wodurch insbesondere eine dynamische Verhärtung bei steigender Frequenz sowie eine Verschlechterung der akustischen Übertragung vermieden werden.

Bei einem mehrlagigen Aufbau mit zwischengeschalteten Gummischichten lassen sich je nach Konfiguration und Länge der Gummiankopplung Dämpfung und Nachgiebigkeit des Federkörpers vorteilhaft beeinflussen.

Darüber hinaus können bei Verwendung entsprechender Harze Einsatztemperaturen derartiger Federkörper von bis zu 150° C erreicht werden. Ferner ergibt sich eine Gewichtsreduzierung gegenüber vergleichbaren Gummi-Metall-Lagern von bis zu 50%.

## Patentansprüche

1. Ringförmiger Federkörper aus Faserverbundwerkstoff zur schwingungsisolierenden Lagerung von Antriebsaggregaten, insbesondere in Kraftfahrzeugen, der einen Wickelkörper (1) mit in mehreren Lagen (2, 3) gewickelten, mit Kunstharz getränkten Fasern aufweist und an zwei gegenüberliegenden Stellen eingespannt ist, wobei mehrere Wickellagen (2) in Umfangsrichtung des Wickelkörpers und quer zur Belastungsrichtung verlaufende Fasern sowie mindestens eine Lage (3) aus im Winkel zu in den anderen Lagen (2) verlaufenden Fasern vorgesehen sind, dadurch gekennzeichnet, daß der Wickelkörper (1) aus mehreren konzentrischen Wickellagen (2, 3; 20, 21; 30, 31; 40, 41) besteht und daß die Einspannungen durch Krafteinleitungselemente gebildet sind, die aus metallischen Bügeln (6, 7) bestehen, die den Wikkelkörper (1) zumindest teilweise umfassen und über elastische Gummischichten (10, 11; 34, 35; 42, 43) mit dem Wickelkörper (1) verbunden sind.

2. Federkörper nach Anspruch 1, dadurch gekennzeichnet, daß mehrere, einen gemeinsamen Schwerpunkt aufweisende, ineinanderliegende Wickelkörper (20, 21; 30, 31; 40, 41) vorgesehen sind, die zumindest abschnittsweise über Zwischenschichten (22; 24; 25; 32, 33; 44) aus einem anderen Material voneinander beabstandet sind.

3. Federkörper nach Anspruch 2, dadurch gekennzeichnet, daß die einzelnen, ineinanderliegenden Wickelkörper (20, 21) parallel zueinander verlaufende Außenkonturen und umlaufend gleichen Abstand voneinander aufweisen.

4. Federkörper nach Anspruch 3, dadurch gekennzeichnet, daß die Zwischenschicht (22; 32, 33; 44) aus Gummi besteht, die an die Wickelkörper (20, 21; 30, 31; 40, 41) anvulkanisiert ist.

5. Federkörper nach Anspruch 3, dadurch gekennzeichnet, daß die Zwischenschicht aus im Winkel zur Umfangsrichtung verlaufenden, eingewickelten Gummibändern (24) besteht.

6. Federkörper nach Anspruch 3, dadurch gekennzeichnet, daß die Zwischenschicht aus schichtweise eingewickelten Gleitfolien (25) besteht.

7. Federkörper nach Anspruch 6, dadurch gekennzeichnet, daß die Gleitfolien (25) aus PTFE bestehen.

8. Federkörper nach Anspruch 5 oder 6, dadurch gekennzeichnet, daß zumindest eine Oberflächenseite der Zwischenschicht (24; 25) lose zum benachbarten Wickelkörper (20) geführt ist.

9. Federkörper nach Anspruch 2 oder 4, dadurch gekennzeichnet, daß die Wickelkörper (20, 21) vor dem Einvulkanisieren des Gummis (22) gegeneinander verspannt sind.

10. Federkörper nach Anspruch 1, dadurch gekennzeichnet, daß die Gummischichten (10, 11) zwischen Bügeln (6, 7) und Wickelkörper (1) einvulkanisiert sind.

11. Federkörper nach Anspruch 1, dadurch gekennzeichnet, daß die Gummischichten (10, 11) zwischen Bügeln (6, 7) und Wickelkörper (1) eingeklebt sind.

12. Federkörper nach Anspruch 1, dadurch gekennzeichnet, daß die Gummischichten (10, 11) zwischen Bügeln (6, 7) und Wickelkörper (1) eingeklemmt sind.

13. Federkörper nach Anspruch 1 und einem der Ansprüche 10 bis 12, dadurch gekennzeichnet, daß die Bügel als den Wickelkörper umschließende, geschlossene Ringe mit rechteckigen Querschnitt ausgebildet sind und seitliche Anschlußelemente aufweisen.

14. Federkörper nach Anspruch 1 und einem der Ansprüche 10 bis 12, dadurch gekennzeichnet, daß die Bügel aus zwei U-förmigen, gegeneinander verspannten Laschen (6, 7) bestehen.

15. Federkörper nach Anspruch 13 oder 14, dadurch gekennzeichnet, daß auf der Innenseite des Wickelkörpers (21) ein Gummipolster (23) als Druckanschlag mindestens an einem der Bügel (7) anvulkanisiert ist.

16. Federkörper nach einem oder mehreren der vorhergehenden Ansprüche, dadurch gekennzeichnet, daß die Wickelkörper (1) im Bereich der Krafteinleitungselemente angeschlossene Zuganschläge (12) aufweisen.

17. Federkörper nach Anspruch 16, dadurch gekennzeichnet, daß die Zuganschläge aus in Druckrichtung flexiblen oder lose gehenden Elementen (12; 13) bestehen, die bei Zugbelastung einen den Ausfederungsweg begrenzenden Anschlag aufweisen.

18. Federkörper nach Anspruch 16, dadurch gekennzeichnet, daß der Wickelkörper (1) mittels Anziehen der Zuganschläge (12) vorgespannt ist.

## Claims

1. A ring-shaped spring element made of fibre composites for the vibration-insulating mounting of drive units, more particularly in motor vehicles, which comprises a winding element (1) with synthetic resin-impregnated fibres wound in a plurality of layers (2, 3) and is clamped at two opposite points, a plurality of winding layers (2) of fibres extending in the circumferential direction of the winding element and transversely to the loading direction being provided and at least one layer (3) of fibres extending at an angle to fibres extending in the other layers (2), characterised in that the winding element (1) comprises a plurality of concentric winding layers (2, 3; 20, 21; 30, 31; 40, 41) and the clamping points are formed by force-introducing elements comprising metallic brackets (6, 7), which at least partially enclose the winding element (1) and are connected with the winding element (1) via elastic rubber layers (10, 11; 34, 35; 42, 43).

2. A spring element according to claim 1, characterised in that a plurality of winding elements (20, 21; 30, 31; 40, 41) arranged within one another and having a common centre of gravity are provided, which are spaced apart at least in sections by means of intermediate layers (22; 24; 25; 32, 33; 44) made of a different material.

3. A spring element according to claim 2, characterised in that the individual winding elements (20, 21) arranged within one another have external contours extending parallel to one another and are spaced at a uniform distance apart circumferentially.

4. A spring element according to claim 3, characterised in that the intermediate layer (22; 32, 33; 44) is made of rubber, which is vulcanised onto the winding elements (20, 21; 30, 31; 40, 41).

5. A spring element according to claim 3, characterised in that the intermediate layer is made of wound rubber strips (24) extending at an angle to the circumferential direction.

6. A spring element according to claim 3, characterised in that the intermediate layer is made of sliding films (25) wound in layers.

7. A spring element according to claim 6, characterised in that the sliding films (25) are made of PTFE.

8. A spring element according to claim 5 or 6, characterised in that at least one surface of the intermediate layer (24; 25) is guided freely relative to the adjacent winding element (20).

9. A spring element according to claim 2 or 4, characterised in that the winding elements (20, 21) are clamped relative to one another prior to the vulcanisation in place of the rubber (22).

10. A spring element according to claim 1, characterised in that the rubber layers (10, 11) are vulcanised in place between brackets (6, 7) and winding element (1).

11. A spring element according to claim 1, characterised in that the rubber layers (10, 11) are bonded in place between brackets (6, 7) and winding element (1).

12. A spring element according to claim 1, characterised in that the rubber layers (10, 11) are clamped in place between brackets (6, 7) and winding element (1).

13. A spring element according to claim 1 and one of claims 10 to 12, characterised in that the brackets are constructed as closed rings having a rectangular cross-section, which enclose the winding element and comprise lateral connecting elements.

14. A spring element according to claim 1 and one of claims 10 to 12, characterised in that the brackets are formed by two U-shaped tongues (6, 7) clamped relative to one another.

15. A spring element according to claim 13 or 14, characterised in that a rubber cushion (23) is vulcanised onto the inside of the winding element (21) on at least one of the brackets (7) to act as a pressure buffer.

16. A spring element according to one or more of the preceding claims, characterised in that the winding elements (1) comprise tension buffers (12) connected in the region of the force-introducing elements.

17. A spring element according to claim 16, characterised in that the tension buffers are elements (12: 13) extending flexibly or loosely in the direction of compression and comprising an abutment limiting the outward springing path under tensile loading.

18. A spring element according to claim 16, characterised in that the winding element (1) is prestressed by tightening the tension buffers (12).

## Revendications

1. Corps annulaire formant ressort, constitué par un matériau composite renforcé par des fibres pour supporter, en les isolant vis-à-vis des vibrations, des systèmes d'entraînement, notamment dans des véhicules automobiles, et qui comporte un corps de bobinage (1) possédant des fibres imprégnées d'une résine synthétique et enroulées suivant plusieurs couches (2,3), et est serré en deux points opposés, et dans lequel il est prévu plusieurs couches de bobinage (2) formées de libres qui s'étendent dans la direction circonférentielle du corps de bobinage et transversalement par rapport à la direction d'application d'une charge, ainsi qu'au moins une couche (3) formée de fibres qui font un angle par rapport aux fibres situées dans les autres couches (2), caractérisé par le fait que le corps de bobinage (1) est constitué de plusieurs couches concentriques de bobinage (2, 3; 20, 21; 30, 31; 40, 41) et que les dispositifs de serrage sont formés par des éléments d'application d'une force, qui sont constitués par des étriers métalliques (6, 7), qui enserrent au moins partiellement le corps de bobinage (1) et sont raccordés au corps de bobinage (1) par l'intermédiaire de couches élastiques de caoutchouc (10, 11; 34, 35; 40, 43).

2. Corps formant ressort suivant la revendication 1, caractérisé par le fait qu'il est prévu plusieurs corps de bobinage (20, 21; 30, 31; 40, 41) qui sont disposés les uns dans les autres, possèdent un centre de gravité commun et sont séparés les uns des autres au moins par endroits au moyen de couches intercalaires (22; 24; 25; 32, 33; 44) réalisées en un autre matériau.

3. Corps formant ressort suivant la revendication 2, caractérisé par le fait que les différents corps de bobinage (20, 21) insérés les uns dans les autres possèdent des contours extérieurs parallèles entre eux et sont séparés par une même distance sur toute la circonférence.

4. Corps formant ressort suivant la revendication 3, caractérisé par le fait que la couche intercalaire (22; 32, 33; 44) est constituée de caoutchouc, qui est fixé par vulcanisation aux corps de bobinage (20, 21; 30, 31; 40, 41).

5. Corps formant ressort suivant la revendication 3, caractérisé par le fait que la couche intercalaire est constituée par des bandes de caoutchouc enroulées (24), qui font un angle par rapport à la direction circonférentielle.

6. Corps formant ressort suivant la revendication 3, caractérisé par le fait que la couche intercalaire est constituée par des feuilles lisses (25) enroulées suivant des couches.

7. Corps formant ressort suivant la revendication 6, caractérisé par le fait que les feuilles lisses (25) sont formées de PTFE.

8. Corps formant ressort suivant la revendication 5 ou 6, caractérisé par le fait qu'au moins une surface de la couche intercalaire (24,25) est guidée d'une manière lâche par rapport au corps de bobinage voisin (20).

9. Corps formant ressort suivant la revendication 2 ou 4, caractérisé par le fait que les corps de bobinage (20,21) sont serrés l'un contre l'autre avant la fixation du caoutchouc (22) par vulcanisation.

10. Corps formant ressort suivant la revendication 1, caractérisé par le fait que les couches de caoutchouc (10,11) sont fixées par vulcanisation entre les étriers (6,7) et le corps de bobinage (1).

11. Corps formant ressort suivant la revendication 1, caractérisé par le fait que les couches de caoutchouc (10,11) sont collées entre les étriers (6,7) et le corps de bobinage (1).

12. Corps formant ressort suivant la revendication 1, caractérisé par le fait que les couches en caoutchouc (10,11) sont bloquées par serrage entre les étriers (6,7) et le corps de bobinage (1).

13. Corps formant ressort suivant la revendication 1 et l'une des revendications 10 à 12, caractérisé par le fait que les étriers sont réalisés sous la forme d'anneaux fermés qui entourent le corps de bobinage et comportent une section transversale rectangulaire, et possèdent des éléments latéraux de raccordement.

14. Corps formant ressort suivant la revendication 1 et l'une des revendications 10 à 12, caractérisé par le fait que les étriers sont constitués par deux pattes en forme de U (6,7) serrées l'une contre l'autre.

15. Corps formant ressort suivant la revendication 13 ou 14, caractérisé par le fait que sur la face intérieure du corps de bobinage (21), un rembourrage en caoutchouc (23) formant butée de compression est fixé par vulcanisation au moins sur l'un des étriers (7).

16. Corps formant ressort suivant une ou plusieurs des revendications précédentes, caractérisé par le fait que les corps de bobinage (1) possèdent des butées de traction (12) prévues dans la zone des éléments d'application d'une force.

17. Corps formant ressort suivant la revendication 16, caractérisé par le fait que les butées de traction sont constituées par des éléments (12;13) qui sont flexibles ou deviennent lâches dans la direction de compression et possèdent une butée limitant le débattement élastique, lors de l'application d'une contrainte de traction.

18. Corps formant ressort suivant la revendication 7, caractérisé par le fait que le corps de bobinage (1) est précontraint au moyen du serrage des butées de traction (12).
